(19) Europäisches Patentamt
European Patent Office
Office européen des brevets

(11) EP 0 601 473 B1

(12) **EUROPÄISCHE PATENTSCHRIFT**

(45) Veröffentlichungstag und Bekanntmachung des Hinweises auf die Patenterteilung:
**18.02.1998 Patentblatt 1998/08**

(51) Int Cl.$^6$: **C08L 25/12**, C08L 55/02, C08L 51/04

(21) Anmeldenummer: **93119405.4**

(22) Anmeldetag: **02.12.1993**

(54) **Thermoplastische Formmassen auf der Basis von Polycarbonaten, Pfropfpolymerisaten und Styrol/Acrylnitril-Copolymerisaten**

Thermoplastic moulding materials based on polycarbonates, graft polymers and styrene/acrylonitrile copolymers

Masses à mouler thermoplastiques à base de polycarbonates, de polymères greffés et de copolymères styrène/acrylonitrile

(84) Benannte Vertragsstaaten:
**BE DE FR GB NL**

(30) Priorität: **10.12.1992 DE 4241555**

(43) Veröffentlichungstag der Anmeldung:
**15.06.1994 Patentblatt 1994/24**

(73) Patentinhaber: **BASF Aktiengesellschaft**
**67063 Ludwigshafen (DE)**

(72) Erfinder:
- **Niessner, Norbert, Dr.**
  **D-67159 Friedelsheim (DE)**
- **Guentherberg, Norbert, Dr.**
  **D-67346 Speyer (DE)**

(56) Entgegenhaltungen:
**EP-A- 0 244 856** **EP-A- 0 244 857**
**EP-A- 0 332 995** **EP-A- 0 488 930**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegenden Erfindung betrifft thermoplastische Formmassen, enthaltend als wesentliche Komponenten

A) 5 bis 25 Gew.-% eines Polycarbonats

B) 10 bis 50 Gew.-% mindestens eines Pfropfpolymerisats, aufgebaut aus

$b_1$) 40 bis 80 Gew.-% einer Pfropfgrundlage aus einem kautschukelastischen Polymeren mit einer Glasübergangstemperatur von unter 10°C

$b_2$) 20 bis 60 Gew.-% einer Pfropfauflage aus

$b_{21}$) 50 bis 95 Gew.-% Styrol oder substituierten Styrolen der allgemeinen Formel I

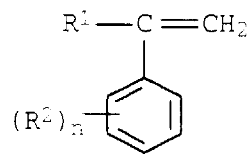

I

wobei $R^1$ einen Alkylrest mit 1 bis 8 C-Atomen oder ein Wasserstoffatom und $R^2$ einen Alkylrest mit 1 bis 8 C-Atomen darstellen und n den Wert 0, 1, 2 oder 3 hat oder Methylacrylat oder Methyl(meth)acrylat oder deren Mischungen und

$b_{22}$) 5 bis 50 Gew.-% Acrylnitril, Methacrylnitril, Methylacrylat, Methylmethacrylat, Maleinsäureanhydrid, mit $C_1$- bis $C_8$-Alkyl- oder $C_6$- bis $C_{20}$-Arylgruppen N-substituierte Maleinsäureimide oder deren Mischungen

C) 5 bis 80 Gew.-% eines thermoplastischen Copolymerisats aus

$c_1$) 50 bis 85 Gew.-% Styrol oder substituierten Styrolen der allgemeinen Formel I oder deren Mischungen

$c_2$) 15 bis 50 Gew.-% Acrylnitril oder Methacrylnitril oder deren Mischungen

D) 5 bis 80 Gew.-% eines von der Komponente C) verschiedenen thermoplastischen Copolymerisats aus

$d_1$) 50 bis 85 Gew.-% Styrol oder substituierten Styrolen der allgemeinen Formel I oder deren Mischungen

$d_2$) 15 bis 50 Gew.-% Acrylnitril oder Methacrylnitril oder deren Mischungen

mit der Maßgabe, daß der Gewichtsanteil der Komponente $d_2$), bezogen auf das Gesamtgewicht der Komponente D), niedriger ist als der Gewichtsanteil der Komponente $c_2$), bezogen auf das Gesamtgewicht der Komponente C) und sich der Acrylnitrilgehalt der Komponente D) von dem Acrylnitrilgehalt der Komponente C) um mindestens 5 Gew.-% unterscheidet.

Außerdem betrifft die Erfindung die Verwendung dieser thermoplastischen Formmassen zur Herstellung von Fasern, Folien und Formkörpern sowie die hierbei erhältlichen Formkörper aus den thermoplastischen Formmassen.

Thermoplastische Formmassen auf der Basis von Polycarbonaten und Styrol/Acrylnitril-Polymerisaten finden aufgrund ihres Eigenschaftsprofils in den verschiedensten Bereichen Verwendung, beispielsweise im Automobilbau, im Bausektor, im Freizeit- und Sportbereich, für Büromaschinen sowie in elektrischen Geräten und Haushaltsgeräten.

Aus der DE-A 11 70 141 sind thermoplastische Formmassen aus Polycarbonat, Pfropfpolymerisaten und Styrol-Acrylnitril-Copolymerisaten bekannt. Gute mechanische Zähigkeitswerte werden jedoch erst dann erreicht, wenn die Menge an Polycarbonat mehr als etwa 40 Gew.-% beträgt. Dadurch werden jedoch die Fließfähigkeit und Spannungsrißbeständigkeit verringert.

Sowohl aus EP-A 244 856 als auch 244 857 waren thermoplastische Formmassen aus Polycarbonaten, Pfropfcopolymerisaten und Styrol-Acrylnitril-Copolymerisaten bekannt. Bevorzugte Formmassen enthalten Styrol-Acrylnitril-Copolymerisate, deren Acrylnitrilgehalt nicht mehr als 5 % voneinander abweichen. Derartige Formmassen sind für einige Anwendungen (z.B. Herstellen dünnwandiger Formteile) nicht hinreichend fließfähig.

Aufgabe der vorliegenden Erfindung war es daher, thermoplastische Formmassen auf der Basis von Polycarbonaten, Pfropfpolymerisaten und Styrol/Acrylnitril-Copolymerisaten zur Verfügung zu stellen, die mit geringen Mengen an Polycarbonat gute Zähigkeit und gute Fließfähigkeit aufweisen.

Die Aufgabe wird erfindungsgemäß gelöst durch die eingangs definierten thermoplastischen Formmassen. Außerdem wurde die Verwendung dieser thermoplastischen Formmassen zur Herstellung von Fasern, Folien und Formkörpern sowie die hierbei erhältlichen Formkörper aus den thermoplastischen Formmassen gefunden.

Als Komponente A) enthalten die erfindungsgemäßen thermoplastischen Formmassen 5 bis 25 Gew.-%, mindestens eines Polycarbonats.

Geeignete Polycarbonate sind beispielsweise solche auf Basis von Diphenolen der allgemeinen Formel II

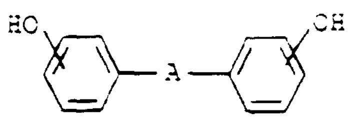

II

worin A eine Einfachbindung, eine $C_1$- bis $C_3$-Alkylen-, eine $C_2$- bis $C_3$-Alkyliden-, eine $C_3$- bis $C_6$-Cycloalkylidengruppe, sowie -S- oder -$SO_2$- bedeutet.

Bevorzugte Diphenole der Formel II sind beispielsweise 4,4'-Dihydroxydiphenyl, 2,2-Bis-(4-hydroxyphenyl)-propan, 2,4-bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan.

Sowohl Homopolycarbonate als auch Copolycarbonate sind als Komponente A) geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Weiterhin können die als Komponente A) geeigneten Polycarbonate an den aromatischen Einheiten ein- bis dreifach mit Halogenatomen, bevorzugt mit Chlor und/oder Brom, substituiert sein. Besonders bevorzugt sind jedoch halogenfreie Verbindungen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten $M_w$ (Gewichtsmittelwert) von 10 000 bis 200 000, vorzugsweise von 20 000 bis 80 000.

Die Diphenole der allgemeinen Formel II sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782.)

Geeignete Kettenabbrecher sind beispielsweise Phenol, p-tert.-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenyl, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Weitere geeignete Polycarbonate sind solche auf Basis von Hydrochinon oder Resorcin.

Als Komponente B) enthalten die erfindungsgemäßen thermoplastischen Formmassen 10 bis 50 Gew.-%, vorzugsweise 15 bis 45 Gew.-%, mindestens eines Pfropfpolymerisats, aufgebaut aus

$b_1$) 40 bis 80 Gew.-%, vorzugsweise 50 bis 75 Gew.-% einer Pfropfgrundlage aus einem kautschukelastischen Polymeren mit einer Glasübergangstemperatur von unter 10°C

$b_2$) 20 bis 60 Gew.-%, vorzugsweise 25 bis 50 Gew.-% einer Pfropfauflage aus

$b_{21}$) 50 bis 95 Gew.-%, bevorzugt 60 bis 80 Gew.-% Styrol oder substituierten Styrolen der allgemeinen Formel I oder Methylacrylat oder Methylmethacrylat oder deren Mischungen

$b_{22}$) 5 bis 50 Gew.-%, vorzugsweise 20 bis 40 Gew.-% Acrylnitril, Methylacrylat, Methacrylnitril, Methylmethacrylat, Maleinsäureanhydrid, mit $C_1$- bis $C_8$-Alkyl- oder $C_6$- bis $C_{20}$-Arylgruppen N-substituierte Maleinsäureimide oder deren Mischungen.

Für die Pfropfgrundlage $b_1$) kommen Polymerisate in Frage, deren Glasübergangstemperatur unterhalb von 10°C, vorzugsweise unterhalb von 0°C liegt. Dies sind z.B. Naturkautschuk, Synthesekautschuk auf der Basis von konjugierten Dienen, ggf. mit anderen Copolymeren sowie Elastomere auf der Basis von $C_1$- bis $C_8$-Alkylestern der Acrylsäure, die ggf. ebenfalls weitere Comonomere enthalten können.

Bevorzugt kommen als Pfropfgrundlage $b_1$) Polybutadien (vgl. DE-A 14 20 775 und DE-A 14 95 089) und Copolymerisate aus Polybutadien und Styrol (vgl. GB-A 649 166) in Betracht.

Weiterhin sind Pfropfgrundlagen $b_1$) bevorzugt, die aufgebaut sind aus

$b_{11}$) 70 bis 99,9 Gew.-%, vorzugsweise 99 Gew.-% mindestens eines Alkylacrylates mit 1 bis 8 C-Atomen im Alkylrest, vorzugsweise n-Butylacrylat und/oder 2-Ethyl-hexylacrylat, insbesondere n-Butylacrylat als alleiniges Alkylacrylat

$b_{12}$) 0 bis 30 Gew.-%, insbesondere 20 bis 30 Gew.-% eines weiteren copolymerisierbaren monoethylenisch ungesättigten Monomeren, wie Butadien, Isopren, Styrol, Acrylnitril, Methylmethacrylat und/oder Vinylmethylether

$b_{13}$) 0,1 bis 5 Gew.-%, vorzugsweise 1 bis 4 Gew.-% eines copolymerisierbaren, polyfunktionellen, vorzugsweise bi- oder trifunktionellen, die Vernetzung bewirkenden Monomeren.

Als solche bi- oder polyfunktionellen Vernetzungsmonomeren $b_{13}$) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanat. Als besonders günstiges Vernetzungsmonomeres hat sich der Acrylsäureester des Tricyclodecenylalkohols erwiesen (vgl. DE-A 12 60 135).

Auch diese Art von Pfropfgrundlagen ist an sich bekannt und in der Literatur beschrieben, beispielsweise in der DE-A 31 49 358.

Von den Pfropfauflagen $b_2$) sind diejenigen bevorzugt, in denen $b_{21}$) Styrol oder $\alpha$-Methylstyrol bedeutet. Als bevorzugte Monomeren-Gemische werden vor allem Styrol und Acrylnitril, $\alpha$-Methylstyrol und Acrylnitril, Styrol, Acrylnitril und Methylmethacrylat, Styrol und Maleinsäureanhydrid eingesetzt. Die Pfropfauflagen sind erhältlich durch Copolymerisation der Komponenten $b_{21}$) und $b_{22}$).

Für den Fall, daß das Pfropfpolymerisat B) eine Pfropfgrundlage $b_1$) enthält, die aus Polybutadienpolymeren aufgebaut ist, so spricht man von ABS-Kautschuken.

Die Pfropfmischpolymerisation kann wie z.B. aus der DE-A 31 49 358 bekannt in Lösung, Suspension oder vorzugsweise in Emulsion erfolgen. Die Weichphase des Pfropfmischpolymerisats weist, bei der bevorzugten Herstellung des ABS-Kautschuks und der Pfropfung in Emulsion, einen mittleren Teilchendurchmesser ($d_{50}$-Wert der integralen Masseverteilung) von 0,08 µm auf. Durch Vergrößerung der Teilchen, z.B. durch Agglomeration oder bei der Gewinnung der Emulsion im Wege des Saatlatex-Verfahrens, wird der $d_{50}$-Wert im Bereich von 0,2 bis 0,5 µm eingestellt. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenden Doppelbindungen erfolgt. Zumindest ein Teil der Monomeren ist also auf den Kautschuk gepfropft, also durch kovalente Bindungen an den Kautschuk-Fadenmolekülen gebunden.

Die Pfropfung kann auch mehrstufig erfolgen, indem zuerst ein Teil der die Pfropfhülle bildenden Monomere aufgepfropft wird und anschließend der Rest.

Ist die Pfropfgrundlage $b_1$) der Pfropfpolymerisate B) aus den Komponenten $b_{11}$), gegebenenfalls $b_{12}$) und $b_{13}$) aufgebaut, so spricht man von ASA-Kautschuken. Ihre Herstellung ist an sich bekannt und beispielsweise in der DE-A 28 26 925, der DE-A 31 49 358 und der DE-A 34 14 118 beschrieben.

Die Herstellung des Pfropfmischpolymerisats B) kann beispielsweise nach der in der DE-PS 12 60 135 beschriebenen Methode erfolgen.

Der Aufbau der Pfropfauflage (Pfropfhülle) des Pfropfmischpolymerisats kann ein- oder zweistufig erfolgen.

Im Falle des einstufigen Aufbaues der Pfropfhülle wird ein Gemisch der Monomeren $b_{21}$) und $b_{22}$) in dem gewünschten Gew.-Verhältnis im Bereich von 95:5 bis 50:50, vorzugsweise von 90:10 bis 65:35 in Gegenwart des Elastomeren $b_1$, in an sich bekannter Weise (vgl. z.B. DE-OS 28 26 925), vorzugsweise in Emulsion, polymerisiert.

Im Falle eines zweistufigen Aufbaus der Pfropfhülle $b_2$) macht die 1. Stufe im allgemeinen 20 bis 70 Gew.-%, vorzugsweise 25 bis 50 Gew.-%, bezogen auf $b_2$), aus. Zu ihrer Herstellung werden vorzugsweise nur monoethylenisch-

ungesättigte aromatische Kohlenwasserstoffe ($b_{21}$) verwendet.

Die 2. Stufe der Pfropfhülle macht im allgemeinen 30 bis 80 Gew.-%, insbesondere 50 bis 75 Gew.-%, jeweils bezogen auf $b_2$), aus. Zu ihrer Herstellung werden Mischungen aus den genannten monoethylenisch ungesättigten aromatischen Kohlenwasserstoffen $b_{21}$) und monoethylenisch ungesättigten Monomeren $b_{22}$) im Gewichtsverhältnis $b_{21}$/$b_{22}$) von im allgemeinen 90:10 bis 60:40, insbesondere 80:20 bis 70:30 angewendet.

Die Bedingungen der Pfropfmischpolymerisation werden vorzugsweise so gewählt, daß Teilchengrößen von 50 bis 700 nm ($d_{50}$-Wert d. integralen Massenverteilung) resultieren. Maßnahmen hierzu sind bekannt und z.B. in der DE-OS 28 26 925 beschrieben.

Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfmischpolymerisate mit unterschiedlicher Teilchengröße zu verwenden.

Um dies zu erreichen, werden die Teilchen des Kautschuks in bekannter Weise, z.B. durch Agglomeration, vergrößert, so daß der Latex bimodal (50 bis 180 nm und 200 bis 700 nm) aufgebaut ist.

Der chemische Aufbau der beiden Pfropfmischpolymerisate ist vorzugsweise derselbe, obwohl die Hülle des grobteiligen Pfropfmischpolymerisates, insbesondere auch zweistufig aufgebaut werden kann.

Mischungen aus der Komponente A) und B), wobei letztere ein grob- und ein feinteiliges Pfropfmischpolymerisat aufweist, sind z.B. in der DE-OS 36 15 607 beschrieben. Mischungen aus der Komponente A) und B), wobei letztere eine zweistufige Pfropfhülle aufweist, sind aus EP-A 111 260 bekannt.

Als Komponente C) enthalten die erfindungsgemäßen thermoplastischen Formmassen 5 bis 80 Gew.-%, vorzugsweise 10 bis 45 Gew.-% eines thermoplastischen Copolymerisats aus

$c_1$) 50 bis 85 Gew.-%, vorzugsweise 60 bis 80 Gew.-% Styrol oder substituierten Styrolen der allgemeinen Formel I oder deren Mischungen

$c_2$) 15 bis 50 Gew.-%, vorzugsweise 20 bis 40 Gew.-% Acrylnitril oder Methacrylnitril oder deren Mischungen.

Besonders bevorzugte Copolymerisate C) sind solche aus Styrol mit Acrylnitril.

Die Copolymerisate C) sind an sich bekannt und lassen sich durch radikalische Polymerisation, insbesondere durch Emulsions-, Suspensions-, Lösungs- und Massepolymerisation herstellen. Sie weisen Viskositäten im Bereich von 40 bis 100 ml/g, vorzugsweise im Bereich von 50 bis 80 ml/g, gemessen an einer 0,5 gew.-%igen Lösung in N,N-Dimethylformamid bei 23°C auf.

Als Komponente D) enthalten die erfindungsgemäßen thermoplastischen Formmassen 5 bis 80 Gew.-%, vorzugsweise 10 bis 45 Gew.-% eines von der Komponente C) verschiedenen thermoplastischen Copolymerisats aus

$d_1$) 50 bis 85 Gew.-%, vorzugsweise 60 bis 80 Gew.-% Styrol oder substituierte Styrole der allgemeinen Formel I oder deren Mischungen

$d_2$) 15 bis 50 Gew.-%, vorzugsweise 20 bis 40 Gew.-% Acrylnitril oder Methacrylnitril oder deren Mischungen.

Besonders bevorzugt sind Copolymerisate D) aus Styrol und Acrylnitril. Bezüglich der Herstellung und der Viskositäten gilt das vorstehend für die Komponente C) Gesagte, worauf hier zur Vermeidung von Wiederholungen verwiesen wird.

Wesentlich für die mechanischen Eigenschaften, insbesondere für die Zähigkeit der erfindungsgemäßen Formmassen ist es, daß der Gewichtsanteil der Komponente $d_2$) an Acrylnitril und/oder Methacrylnitril, bezogen auf das Gesamtgewicht der Komponente D), niedriger ist als der Gewichtsanteil $c_2$) an Acrylnitril und/oder Methacrylnitril, bezogen auf das Gesamtgewicht der Komponente C).

Aus G.E. Molau, Polym. Lett. Bd. 3, S. 1007 bis 1015 (1965) ist bekannt, daß Styrol-Acrylnitril-Copolymerisate nicht miteinander mischbar sind, sobald sie sich im Acrylnitrilgehalt um mehr als 5 Gew.-% voneinander unterscheiden. Überraschenderweise kann die Zähigkeit von Mischungen aus Polycarbonat (Komponente A)), Pfropfpolymerisat (Komponente B)) und Styrol-Acrylnitril-Copolymerisate (Komponente C)) dadurch gesteigert werden, daß man ein zu C) unverträgliches Styrol-Acrylnitril-Copolymerisat D) zugibt, welches sich in seinem Acrylnitrilgehalt von C) um mindestens 5 Gew.-% unterscheidet.

Weiterhin können die erfindungsgemäßen thermoplastischen Formmassen bis zu 60 Gew.-%, insbesondere bis zu 20 Gew.-% faser- oder teilchenförmige Füllstoffe oder deren Mischungen enthalten. Dabei handelt es sich vorzugsweise um kommerziell erhältliche Produkte. Verarbeitungshilfsmittel und Stabilisatoren wie UV-Stabilisatoren, Schmiermittel und Antistatika werden üblicherweise in Mengen von 0,01 bis 5 Gew.-% verwendet, Verstärkungsmittel wie Kohlenstoffasern und Glasfasern hingegen von 5 bis 40 Gew.-%.

Die verwendeten Glasfasern können aus E-, A- oder C-Glas sein und sind vorzugsweise mit einer Schlichte und

einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem seien Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagsstoffe, die elektromagnetische Wellen abschirmen genannt. Insbesondere kommen Al-Flocken (K 102 der Fa. Transmet) für EMI-Zwecke (electromagnetic interference) in Betracht; ferner Abmischen dieser Masse mit zusätzlichen Kohlenstoffasern, Leitfähigkeitsruß oder nickelbeschichteten C-Fasern.

Die erfindungsgemäßen Formmassen können ferner weitere Zusatzstoffe enthalten, die für Polycarbonate, SAN-Polymerisate und Pfropfmischpolymerisate auf Basis von ASA oder ABS oder deren Mischungen typisch und gebräuchlich sind. Als solche Zusatzstoffe seien beispielsweise genannt: Farbstoffe, Pigmente, Antistatika, Antioxidantien und insbesondere die Schmiermittel, die für die Weiterverarbeitung der Formmasse, z.B. bei der Herstellung von Formkörpern bzw. Formteilen erforderlich sind.

Das Mischen der Komponenten A) bis D) und ggf. der Zusatzstoffe kann nach allen bekannten Methoden erfolgen. Vorzugsweise geschieht jedoch das Mischen der Komponenten durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltbaren Produkte der Pfropfmischpolymerisation (Komponente B)) können aber auch teilweise entwässert oder direkt als Dispersion mit den Komponenten C), D) und dann mit dem Polycarbonat A) und ggf. Zusatzstoffen vermischt werden. Bevorzugt erfolgt die Herstellung der Formmasse durch Mischen auf einem Extruder bei Temperaturen von 200 bis 320°C.

Die erfindungsgemäßen thermoplastischen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern.

Die erfindungsgemäßen thermoplastischen Formmassen weisen vor allem eine hohe Schlagzähigkeit bei guter Fließfähigkeit auf.

Beispiele

Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als dso-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar.

Es wurden folgende Komponenten eingesetzt:

A) Ein handelsübliches Polycarbonat auf der Basis von Bisphenol A mit einer relativen Lösungsviskosität $\eta_{rel}$ von 1,3 ml/g, gemessen an einer 0,5 gew.-%igen Lösung in Methylenchlorid bei 23°C.

B1) Ein feinteiliges Pfropfmischpolymerisat, hergestellt aus

$\beta_1$) 16 g Butylacrylat und 0,4 g Tricyclodecenylacrylat, die in 150 g Wasser unter Zusatz von 1 g des Natriumsalzes einer $C_{12}$-$C_{18}$-Paraffinsulfonsäure, 0,3 g Kaliumpersulfat, 0,3 g Natriumhydrogencarbonat und 0,15 g

Natriumpyrophosphat unter Rühren auf 60°C erwärmt wurden. 10 Minuten nach dem Anspringen der Polymerisationsreaktion wurden innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt und die Teilchengrößenverteilung war eng (Quotient Q = 0,29).

$\beta_2$) 150 g des nach $\beta_1$) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße 91 nm.

B2) Ein Pfropfmischpolymerisat, das folgendermaßen hergestellt wurde:

Durch Polymerisation von 60 g Butadien in Gegenwart einer Lösung von 0,6 g tert.-Dodecylmercaptan, 0,7 g $C_{14}$-Na-Alkylsulfonat als Emulgator, 0,2 g Kaliumperoxodisulfat und 0,2 g Natriumpyrosulfat in 80 g Wasser wurde bei 65°C ein Polybutadienlatex hergestellt. Nach Beendigung der Polymerisation wurde der Polymerisationsautoklav entspannt; der Umsatz betrug 98 %.

Es wurde ein Polybutadien erhalten, dessen mittlere Teilchengröße bei 100 nm lag. Der erhaltene Latex wurde durch Zusatz von 25 g einer Emulsion eines Copolymeren aus 96 g Ethylacrylat und 4 g Methacrylsäureamid mit einem Feststoffgehalt von 10 Gew.-% agglomeriert, wobei ein Polybutadienlatex mit einer mittleren Teilchengröße von 350 nm entstand. Nach Zusetzen von 40 g Wasser, 0,4 g Na-$C_{14}$-Alkylsulfonat und 0,2 g Kaliumperoxodisulfat wurden 40 g einer Mischung aus Styrol und Acrylnitril im Gewichtsverhältnis 70:30 innerhalb von 4 Stunden zugeführt. Die Polymerisation erfolgte unter Rühren des Ansatzes bei 75°C. Der Umsatz, bezogen auf Styrol/Acrylnitril, war praktisch quantitativ.

Die erhaltene Pfropfkautschukdispersion wurde mittels einer wäßrigen Magnesiumsulfatlösung gefällt und entwässert.

C) Ein Copolymerisat aus Styrol und Acrylnitril im Gew.-Verhältnis 65:35 mit einer Viskositätszahl von 80 ml/g (gemessen an einer 0,5 gew.-%igen Lösung in Dimethylformamid bei 23°C), hergestellt durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist.

D) Ein Copolymerisat aus Styrol und Acrylnitril im Gew.-Verhältnis 75:25 mit einer Viskositätszahl von 80 ml/g (gemessen an einer 0,5 gew.-%igen Lösung in Dimethylformamid bei 23°C), hergestellt durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist.

Beispiele 1 und 2

Die Komponenten A) bis D) wurden bei 250°C auf einem Doppelschneckenextruder ZSK 30 der Fa. Werner & Pfleiderer mit 200 U/min und einem Durchsatz von 10 kg/h extrudiert und der ausgetragene Strang nach dem Erkalten granuliert. Aus dem getrockneten Granulat der Proben wurden die Formmassen für die Eigenschaftsprüfungen durch Spritzgießen hergestellt.

Beispiele 3 und 4

Die Komponenten B und C, sowie B und D wurden im Gew.-Verhältnis B:C=1:1, sowie B:D=1:1 bei 250°C auf einem Doppelschneckenextruder ZSK 30 der Fa. Werner & Pfleiderer mit 200 U/min und einem Durchsatz von 10 kg/h gemischt, als Strang ausgetragen, gekühlt und granuliert. Dieses Granulat wurde dann in einem zweiten Schritt mit der Komponente A) wieder auf einem Doppelschneckenextruder (ZSK 30 von Werner & Pfleiderer; 200 U/min; 10 kg/h; 250°C) gemischt, extrudiert und granuliert. Die Formmassen für die Eigenschaftsprüfungen wurden ebenfalls durch Spritzgießen hergestellt.

Vergleichsbeispiele V1 bis V4

Es wurde analog den Beispielen 1 und 2 gearbeitet.

Vergleichsbeispiele V5 bis V8

Es wurde analog den Beispielen 3 und 4 gearbeitet.

Die Zusammensetzungen und Eigenschaften der thermoplastischen Formmassen sind in der Tabelle zusammengestellt.

Die Bestimmung der Wärmeformbeständigkeit erfolgte durch die Vicat-Erweichungstemperaturen nach der Methode B/50 (DIN 53 460) an Normkleinstäben der Abmessungen 60 mm x 6 mm x 4 mm. Die Fließfähigkeit wurde durch Messung des Schmelzindex MVI (Melt Volume Index) nach DIN 53 735 bei 200°C und 21,6 kg Belastung bzw. bei 220°C und 10 kg Belastung bestimmt.

Die Bestimmung der Kerbschlagzähigkeit ak erfolgte nach DIN 53 453. Die Angabe der (Spritztemperatur/Prüftemperatur) ist in °C.

Die Durchstoßarbeit $W_g$ wurde nach DIN 53 443 an bei 280°C gespritzten, 2 mm dicken Rundscheiben mit einem Durchmesser von 60 mm bei einer Prüftemperatur von -40°C bzw. 23°C bestimmt.

Tabelle

| | Beispiele/Vergleichsbeispiele | | | | | | | | | | | |
|---|---|---|---|---|---|---|---|---|---|---|---|---|
| | 1 | 3 | 2 | 4 | V1 | V5 | V6 | V2 | V7 | V8 | V3 | V4 |
| Komponenten [Gew.-%] | | | | | | | | | | | | |
| A) | 20 | 20 | 20 | 20 | - | - | - | 20 | 20 | 20 | - | 20 |
| B1) | 40 | 40 | - | 40 | 50 | 50 | 50 | 40 | 40 | 40 | - | - |
| B2) | - | - | 30 | - | - | - | - | - | - | - | 30 | 30 |
| C) | 30 | 30 | 40 | 10 | 50 | 50 | - | 40 | 40 | - | 70 | 50 |
| D) | 10 | 10 | 10 | 30 | - | - | 50 | - | - | 40 | - | - |
| Vicat [°C] | 98 | 95,2 | 105 | 94,8 | 87 | 85,1 | 86,5 | 97 | 95,5 | 95 | 100 | 104 |
| MVI [ml/10 min] 200°C/21,6 kg | 3,6 | 4,2 | - | 4,0 | 4,6 | 4,9 | 4,2 | 3,6 | 4,1 | 4,0 | - | - |
| MVI [ml/10 min] 220°C/10 kg | - | - | 5,8 | - | - | - | - | - | - | - | 4,5 | 5,0 |
| $a_k$ (220/23) [kJ/m²] | 20 | 20 | - | 17 | 8 | 17 | 8 | 14 | 14 | 8 | - | - |
| $a_k$ (250/23) [kJ/m²] | 23 | 28 | 15 | 21 | 11 | 29 | 5 | 22 | 28 | 9 | 12 | 13 |
| $a_k$ (280/23) [kJ/m²] | 30 | 31 | - | 23 | 29 | 29 | 5 | 31 | 31 | 11 | - | - |
| $a_k$ (250/-40) [kJ/m²] | - | - | 6 | - | - | - | - | - | - | - | 4 | 4 |
| $W_g$ (280/-40) [Nm] | 22 | - | - | - | 10 | - | - | 12 | - | - | - | - |
| $W_g$ (280/23) [Nm] | - | 46 | - | 47 | - | 44 | 43 | - | 45 | 46 | - | - |

**Patentansprüche**

1. Thermoplastische Formmassen, enthaltend als wesentliche Komponenten

   A) 5 bis 25 Gew.-% eines Polycarbonats

   B) 10 bis 50 Gew.-% mindestens eines Pfropfpolymerisats, aufgebaut aus

   $b_1$) 40 bis 80 Gew.-% einer Pfropfgrundlage aus einem kautschukelastischen Polymeren mit einer Glasübergangstemperatur von unter 10°C

   $b_2$) 20 bis 60 Gew.-% einer Pfropfauflage aus

   $b_{21}$) 50 bis 95 Gew.-% Styrol oder substituierten Styrolen der allgemeinen Formel I

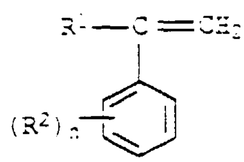

I

   wobei $R^1$ einen Alkylrest mit 1 bis 8 C-Atomen oder ein Wasserstoffatom und $R^2$ einen Alkylrest mit 1 bis 8 C-Atomen darstellen und n den Wert 0, 1, 2 oder 3 hat oder Methylacrylat oder Methyl(meth)acrylat oder deren Mischungen und

   $b_{22}$) 5 bis 50 Gew.-% Acrylnitril, Methacrylnitril, Methylacrylat, Methylmethacrylat, Maleinsäureanhydrid, mit $C_1$- bis $C_8$-Alkyl- oder $C_6$- bis $C_{20}$-Arylgruppen N-substituierte Maleinsäureimide oder deren Mischungen

   C) 5 bis 80 Gew.-% eines thermoplastischen Copolymerisats aus

   $c_1$) 50 bis 85 Gew.-% Styrol oder substituierten Styrolen der allgemeinen Formel I oder deren Mischungen

   $c_2$) bis 50 Gew.-% Acrylnitril oder Methacrylnitril oder deren Mischungen

   D) 5 bis 80 Gew.-% eines von der Komponente C) verschiedenen thermoplastischen Copolymerisats aus

   $d_1$) 50 bis 85 Gew.-% Styrol oder substituierten Styrolen der allgemeinen Formel I oder deren Mischungen

   $d_2$) 15 bis 50 Gew.-% Acrylnitril oder Methacrylnitril oder deren Mischungen

   mit der Maßgabe, daß der Gewichtsanteil der Komponente $d_2$), bezogen auf das Gesamtgewicht der Komponente D), niedriger ist als der Gewichtsanteil der Komponente $c_2$), bezogen auf das Gesamtgewicht der Komponente C) und sich der Acrylnitrilgehalt der Komponente D) von dem Acrylnitrilgehalt der Komponente C) um mindestens 5 Gew.-% unterscheidet.

2. Thermoplastische Formmassen nach Anspruch 1, dadurch gekennzeichnet, daß der Gewichtsanteil der Komponente $d_2$), bezogen auf das Gesamtgewicht der Komponente D), um mindestens 5 Gew.-% niedriger ist als der Gewichtsanteil der Komponente $c_2$), bezogen auf das Gesamtgewicht der Komponente C).

3. Thermoplastische Formmassen nach den Ansprüchen 1 und 2, dadurch gekennzeichnet, daß sie

   die Komponente A) in einer Menge von 5 bis 25 Gew.-%,
   die Komponente B) in einer Menge von 15 bis 45 Gew.-%,
   die Komponente C) in einer Menge von 10 bis 45 Gew.-% und
   die Komponente D) in einer Menge von 10 bis 45 Gew.-%

enthalten.

**4.** Thermoplastische Formmassen nach den Ansprüchen 1 bis 3, dadurch gekennzeichnet, daß die Komponente C) aufgebaut ist aus

$c_1$) 60 bis 80 Gew.-% Styrol oder substituierten Styrolen der allgemeinen Formel I oder deren Mischungen

$c_2$) 20 bis 40 Gew.-% Acrylnitril oder Methacrylnitril oder deren Mischungen

und die Komponente D) aufgebaut ist aus
$d_1$) 60 bis 80 Gew.-% Styrol oder substituierten Styrolen der allgemeinen Formel I oder deren Mischungen.

**5.** Verwendung der thermoplastischen Formmassen gemäß den Ansprüchen 1 bis 4 zur Herstellung von Fasern, Folien und Formkörpern.

**6.** Formkörper, erhältlich aus den thermoplastischen Formmassen gemäß den Ansprüchen 1 bis 4 als wesentliche Komponente.

## Claims

**1.** A thermoplastic molding material containing, as essential components,

A) from 5 to 25% by weight of a polycarbonate,

B) from 10 to 50% by weight of at least one graft polymer composed of

$b_1$) from 40 to 80% by weight of a grafting base comprising an elastomeric polymer having a glass transition temperature of less than 10°C and

$b_2$) from 20 to 60% by weight of a graft comprising

$b_{21}$) from 50 to 95% by weight of styrene or substituted styrenes of the formula I

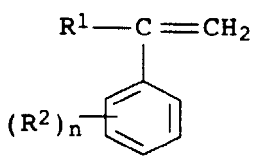

I

where $R^1$ is alkyl of 1 to 8 carbon atoms or hydrogen, $R^2$ is alkyl of 1 to 8 carbon atoms and n is 0, 1, 2 or 3, or methyl acrylate or methyl methacrylate or a mixture thereof and

$b_{22}$) from 5 to 50% by weight of acrylonitrile, methacrylonitrile, methyl acrylate, methyl methacrylate, maleic anhydride, maleimides N-substituted by $C_1$-$C_8$-alkyl or $C_6$-$C_{20}$-aryl, or a mixture thereof,

C) from 5 to 80% by weight of a thermoplastic copolymer comprising

$c_1$) from 50 to 85% by weight of styrene or substituted styrenes of the formula I or of a mixture thereof and

$c_2$) from 15 to 50% by weight of acrylonitrile or methacrylonitrile or of a mixture thereof and

D) from 5 to 80% by weight of a thermoplastic copolymer which differs from component C) and comprises

$d_1$) from 50 to 85% by weight of styrene or substituted styrenes of the formula I or of a mixture thereof and

$d_2$) from 15 to 50% by weight of acrylonitrile or methacrylonitrile or of a mixture thereof,

with the proviso that the amount by weight, based on the total weight of component D), of component $d_2$) is lower than the amount by weight, based on the total weight of component C), of component $c_2$) and the acrylonitrile content of component D) differs from the acrylonitrile content of component C) by at least 5% by weight.

**2.** A thermoplastic molding material as claimed in claim 1, wherein the amount by weight, based on the total weight of component D), of component $d_2$) is at least 5% by weight, based on the total weight of component C), lower than the amount by weight of component $c_2$).

**3.** The thermoplastic molding material as claimed in claim 1 or 2, which contains

component A) in an amount of from 5 to 25% by weight,
component B) in an amount of from 15 to 45% by weight,
component C) in an amount of from 10 to 45% by weight, and
component D) in an amount of from 10 to 45% by weight.

**4.** A thermoplastic molding material as claimed in any of claims 1 to 3, wherein component C) is composed of

$c_1$) from 60 to 80% by weight of styrene or substituted styrenes of the formula I or of a mixture thereof and

$c_2$) from 20 to 40% by weight of acrylonitrile or methacrylonitrile or of a mixture thereof

and component D) is composed of
$d_1$) from 60 to 80% by weight of styrene or substituted styrenes of the formula I or of a mixture thereof.

**5.** The use of a thermoplastic molding material as claimed in any of claims 1 to 4 for the production of fibers, films and moldings.

**6.** A molding obtainable from a thermoplastic molding material as claimed in any of claims 1 to 4 as an essential component.

**Revendications**

**1.** Masses à mouler thermoplastiques, qui contiennent, à titre de composants essentiels,

A) 5 à 25% en poids d'un polycarbonate,
B) 10 à 50% en poids d'au moins un copolymère de greffage, constitué de

$b_1$) 40 à 80% en poids d'une base de greffage formée d'un polymère présentant l'élasticité du caoutchouc et possédant une température de transition vitreuse inférieure à 10°C,
$b_2$) 20 à 60% en poids d'une enveloppe de greffage constituée de

$b_{21}$) 50 à 95% en poids de styrène ou de styrènes substitués de la formule générale I

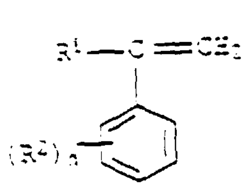

I

dans laquelle $R^1$ représente un radical alkyle comportant de 1 à 8 atomes de carbone, ou un atome d'hydrogène et $R^2$ représente un radical alkyle comportant de 1 à 8 atomes de carbone et n est égal à 0, 1, 2 ou 3, ou d'acrylate de méthyle ou de (méth)acrylate de méthyle ou leurs mélanges et
$b_{22}$) 5 à 50% en poids d'acrylonitrile, de méthacrylonitrile, d'acrylate de méthyle, de méthacrylate de

méthyle, d'anhydride de l'acide maléique, de l'imide de l'acide maléique N-substitué par des radicaux alkyle en $C_1$ à $C_8$ ou des radicaux aryle en $C_6$ à $C_{20}$, ou leurs mélanges,

C) 5 à 80% en poids d'un copolymère thermoplastique constitué de

$c_1$) 50 à 85% en poids de styrène ou de styrènes substitués de la formule générale I ou leurs mélanges,
$c_2$) 15 à 50% en poids d'acrylonitrile ou de méthacrylonitrile ou leurs mélanges,

D) 50 à 80% en poids d'un copolymère thermoplastique différent du composant C), constitué de

$d_1$) 50 à 85% en poids de styrène et de styrènes substitués de la formule générale I ou leurs mélanges,
$d_2$) 15 à 50% d'acrylonitrile ou de méthacrylonitrile ou leurs mélanges,

avec la condition que la fraction pondérale du composant $d_2$), par rapport au poids total du composant D), soit inférieure à la fraction pondérale du composant $c_2$), par rapport au poids total du composant C) et que la teneur en acrylonitrile du composant D) diffère de la teneur en acrylonitrile du composant C) d'au moins 5% en poids.

**2.** Masses à mouler thermoplastiques suivant la revendication 1, caractérisées en ce que la fraction pondérale du composant $d_2$), par rapport au poids total du composant D), est inférieure d'au moins 5% en poids à la fraction pondérale du composant $c_2$), par rapport au poids total du composant C).

**3.** Masses à mouler thermoplastiques suivant les revendications 1 et 2, caractérisées en ce qu'elles contiennent

le composant A) en une proportion de 5 à 25% en poids,
le composant B) en une proportion de 15 à 45% en poids,
le composant C) en une proportion de 10 à 45% en poids et
le composant D) en une proportion de 10 à 45% en poids.

**4.** Masses à mouler thermoplastiques suivant l'une quelconque des revendications 1 à 3, caractérisées en ce que le composant C) est constitué de

$c_1$) 60 à 80% en poids de styrène ou de styrènes substitués de la formule générale I ou leurs mélanges,
$c_2$) 20 à 40% en poids d'acrylonitrile ou de méthacrylonitrile ou leurs mélanges et

et le composant D) est constitué de
$d_1$) 60 à 80% en poids de styrène ou de styrènes substitués de la formule générale I ou leurs mélanges.

**5.** Utilisation des masses à mouler thermoplastiques suivant l'une quelconque des revendications 1 à 4, pour la fabrication de fibres, de feuilles et d'articles moulés.

**6.** Articles moulés que l'on peut obtenir à partir des masses à mouler thermoplastiques suivant l'une quelconque des revendications 1 à 4, à titre de composants essentiels.